# EUROPÄISCHE PATENTANMELDUNG

(11) **EP 3 670 590 A1**
(43) Veröffentlichungstag der Anmeldung: **24.06.2020**
(21) Anmeldenummer: 20152452.7
(22) Anmeldetag: 25.02.2009
(51) Int. Cl.: C08K 5/00, C08K 5/5313, C09K 21/12, C08K 3/10, C08K 5/098, C08L 77/06

(54) **VERFAHREN ZUR HERSTELLUNG FLAMMWIDRIGER, NICHT KORROSIVER UND GUT FLIESSFÄHIGER POLYAMIDFORMMASSEN**

(30) Priorität: 03.03.2008 DE 102008012225; 23.05.2008 DE 102008024752; 26.08.2008 DE 102008039659
(62) Teilanmeldung aus: 09717273.8
(71) Anmelder: Clariant International Ltd, 4132 Muttenz (CH)
(72) Erfinder: HOEROLD, Sebastian, 86420 Diedorf (DE); SCHACKER, Ottmar, 86368 Gersthofen (DE); BAUER, Harald, 50170 Kerpen (DE); KRAUSE, Werner, 50354 Huerth (DE); MARRWITZ, Daniela, 65835 Liederbach (DE)
(74) Vertreter: Jacobi, Carola

(57) **Zusammenfassung**

Verfahren zur Herstellung flammwidriger, nicht korrosiver und gut fließfähiger Polyamidformmassen

Die Erfindung betrifft ein Verfahren zur Herstellung flammwidriger, nicht korrosiver, gut fließfähiger teilaromatischer Polyamide, dadurch gekennzeichnet, dass eine Flammschutzmittelmischung aus einem Phosphinsäuresalz der Formel (I) mit M = Al, Mg, Ca, Ti, Na (Komponente A) 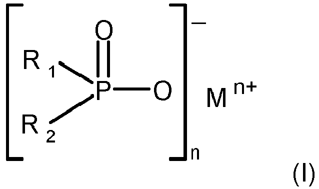 worin
R¹, R²
gleich oder verschieden sind und C₁-C₆-Alkyl, linear oder verzweigt und/oder Aryl;
n
1 bis 3
bedeuten, und als Komponente B Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphinsäure und/oder der Ethylmethylphosphinsäure, Aluminiumoxid, Aluminiumhydroxid, Aluminiumphosphat, Aluminiumhypophosphit, Aluminiumnitrat und/oder basisches Aluminiumnitrat eingesetzt wird, wobei Komponente A in 70 - 99,5 Gew.-% und Komponente B in 0,5 - 30 Gew.-% in der Flammschutzmittelmischung enthalten ist.

## Beschreibung

Die vorliegende Erfindung betrifft ein Verfahren zur Herstellung flammwidriger, nicht korrosiver und gut fließfähiger Polyamidformmassen sowie diese Massen selbst.

Salze von Phosphinsäuren (Phosphinate) haben sich als wirksame flammhemmende Zusätze für thermoplastische Polymere erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als beispielsweise die Alkalimetallsalze (EP-A-0 699 708).

In der DE-A-196 07 635 werden Calcium- und Aluminiumphosphinate als besonders effektive Flammschutzmittel für Polyamide beschrieben. Unter Polyamiden werden Polymere verstanden, die über eine Amidgruppe wiederkehrende Einheiten in der Polymerkette enthalten. Als besonders geeignete Polyamide werden Polyamid 6 und Polyamid 66 genannt. Daraus hergestellte Formmassen erreichen nach UL94 die Brandklasse V0 bei einer Probekörperdicke von 1,2 mm.

Darüber hinaus wurden synergistische Kombinationen von Phosphinaten mit verschiedenen stickstoffhaltigen Verbindungen gefunden, die in einer ganzen Reihe von Polymeren als Flammschutzmittel effektiver wirken, als die Phosphinate allein (WO 1997/039053, DE-A-197 34 437, DE-A-197 37 727 und US 6,255,371 B1).

Unter anderem wurden Melamin und Melaminverbindungen als wirksame Synergisten beschrieben, beispielsweise Melamincyanurat und Melaminphosphat, die selbst auch eine gewisse Flammschutzwirkung in bestimmten Thermoplasten haben, in Kombination mit Phosphinaten aber deutlich wirksamer sind.

Auch höhermolekulare Derivate des Melamins wie die Kondensationsprodukte Melam, Melem und Melon sowie entsprechende Umsetzungsprodukte dieser Verbindungen mit Phosphorsäure wie Dimelaminpyrophosphat und Melaminpolyphosphate sind als Flammschutzmittel beschrieben worden und als Synergisten zu Phosphinaten wirksam.

Die DE-A-103 16 873 beschreibt flammgeschützte Polyamidformmassen, bestehend aus 30 - 80 Gew.-% eines teilaromatischen, teilkristallinen Polyamids und 1 - 30 Gew.-% eines Phosphinsäure- oder Diphosphinsäuresalzes als Flammschutzmittel. In teilaromatischen Polyamiden wird eine bessere Wirksamkeit der Phosphinsäuresalze beschrieben als in aliphatischen Polyamiden.

Nachteilig bei den beschriebenen Zusätzen von Flammschutzmitteln ist ein stärkerer Verschleiß von Metallteilen der Plastifiziereinheit und der Düse beim Compoundieren bzw. Spritzgießen von Polyester oder Hochtemperatur-Polyamid Compounds mit bestimmten Phosphinaten.

Generell führen harte Füllstoffe (wie z. B. Glasfasern) zusammen mit korrosiven Spaltprodukten (etwa von Flammschutzmitteln) zu Verschleiß an metallischen Oberflächen von Werkzeugen. Dies macht je nach Materialqualität der metallischen Oberflächen und der verwendeten Kunststoffe ein häufigeres Wechseln von Heizmantel der Fördereinheit, der Förderschnecke sowie der Spritzgusswerkzeuge erforderlich. Da glasfaserverstärkte thermoplastische Polymere abrasiv sind werden den Möglichkeiten des Korrosionsschutzes der Schnecken Grenzen gesetzt, da sehr korrosionsbeständige Stähle nicht die erforderliche Härte für die Verarbeitung glasfaserverstärkter Polymere aufweisen.

Korrosion ist laut DIN EN ISO 8044 die physikochemische Wechselwirkung zwischen einem Metall und seiner Umgebung, als Folge derer es zu einer Veränderung der Eigenschaften des Metalls und damit zur erheblichen Beeinträchtigung der Funktion des Metalls, der Umgebung oder des technischen Systems, von dem dieses einen Teil bildet, kommen kann.

Da man wegen der Miniaturisierung, insbesondere in der Elektronik-Industrie, sehr dünnwandige Komponenten herstellt, wird für die dafür eingesetzten Formmassen eine Brandklassierung gemäß UL94 von V0 bei 0,4 mm gefordert. Darüber hinaus ist eine gute Fließfähigkeit der Polyamide für dünnwandige Anwendungen wichtig.

Nachteilig ist bei den beschriebenen Zusätzen von Flammschutzmitteln weiterhin der Rückgang der Fließfähigkeit im Vergleich zum nicht flammgeschützten Polyamid durch den Anteil an nicht schmelzenden Feststoffen.

Es war daher Aufgabe der vorliegenden Erfindung ein Verfahren zur Herstellung flammgeschützter Polyamide zur Verfügung zu stellen, die mit halogenfreiem Flammschutz UL 94 V-0 bei 0,4 mm Wandstärke erreichen, in ihrem Materialverschleiß ähnliche Werte wie nicht flammgeschützte Polymere erreichen und eine gute Fließfähigkeit sowie Migrationsfestigkeit aufweisen.

Es wurde nun überraschend gefunden, das Mischungen aus Phosphinaten der Metalle Al, Mg, Ca, Ti, Zn oder Na mit bestimmten Metallseifen und Metallsalzen in teilaromatischen Hochtemperaturpolyamiden wirksame Flammschutzmittel darstellen und zudem deutlich geringerer Materialverschleiß und höhere Fließfähigkeiten erreicht werden können als bei Verwendung der Phosphinate der Metalle allein. Es wurde weiterhin überraschend gefunden, dass die hohe Wärmeformbeständigkeit der Polyamide nach Zusatz der Phosphinate der vorgenannten Metalle mit Metallseifen und Metallsalzen weitgehend erhalten bleibt und die Phosphinate/Polymer-Mischungen bei hohen Temperaturen verarbeitet werden können, ohne das es zu Polymerabbau oder Verfärbungen kommt.

Wegen ihrer Formbeständigkeit bei hohen Temperaturen und des günstigen Brandverhaltens eignen sich die Hochtemperatur - Polyamide sehr gut zur Herstellung von dünnwandigen Formkörpern für die Elektro- und Elektronik-Industrie.

Die Erfindung betrifft daher ein Verfahren zur Herstellung flammwidriger, nicht korrosiver, gut fließfähiger teilaromatischer Polyamide, dadurch gekennzeichnet, dass eine Flammschutzmittelmischung aus einem Phosphin-säuresalz der Formel (I) mit M = Al, Mg, Ca, Ti, Zn oder Na (Komponente A) 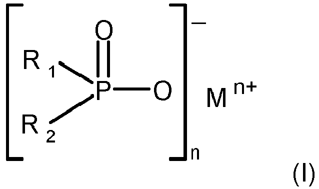 worin
- R¹, R²: gleich oder verschieden sind und C₁-C₆-Alkyl, linear oder verzweigt und/oder Aryl;
- n: 1 bis 3;
bedeuten, und als Komponente B Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphin-säure und/oder der Ethylmethylphosphinsäure, Aluminiumoxid, Aluminiumhydroxid, Aluminiumphosphat, Aluminiumhypophosphit, Aluminiumnitrat und/oder basisches Aluminiumnitrat eingesetzt wird, wobei Komponente A in 70 - 99,5 Gew.-% und Komponente B in 0,5 - 30 Gew.-% in der Flammschutzmittelmischung enthalten ist.

Bevorzugt sind Komponente A in 95 - 99,5 Gew.-% und die Komponente B in 0,5 - 5 Gew.-% enthalten.

Bei den Metallsalzen der organischen Säuren handelt es sich um Aluminium-, Magnesium-, Kalium-, Natrium-, Zink- oder Bariumsalze von langkettigen aliphatischen Carbonsäuren (Fettsäuren), die Kettenlängen von C₁₄ bis C₄₀ aufweisen.

Bevorzugt handelt es sich bei Komponente B um Salze der Stearinsäure wie Natriumstearat, Bariumstearat, Aluminium- und/oder Zinkstearat.

Besonders bevorzugt handelt es sich bei Komponente B um Umsetzungsprodukte von Montanwachssäuren mit einem Calcium- oder Natriumsalz.

Bevorzugt handelt es sich bei Komponente B um Natriumphosphit, Natriumhypophosphit und/oder - für den Fall, dass M ≠ Na ist - das Natriumsalz der Dimethylphosphinsäure, der Diethylphosphinsäure und/oder der Ethylmethylphosphinsäure; um Natriumnitrat und/oder Natriumnitrit; um Bariumsulfat; um Calciumcarbonat, Calciumphosphit und/oder Calciumhypophosphit, um Magnesiumborat, Magnesiumhydroxid, Hydrotalcite, Magnesium-Carbonate oder Magnesium-Calcium-Carbonate; um Zinkoxid, -carbonat, -hydroxycarbonat, -stannat, -hydroxystannat, -phosphat, und/oder -sulfid und/oder - für den Fall, dass M ≠ Zn ist - das Zinksalz der Dimethylphosphinsäure, der Diethylphosphinsäure und/oder der Ethylmethylphosphinsäure; um Aluminiumoxid, -hydroxid und/oder -phosphat, Aluminiumhypophosphit, Aluminiumnitrat und/oder basisches Aluminiumnitrat.

Besonders bevorzugt handelt es sich bei Komponente B um Natriumphosphit, Bariumsulfat, Zinkcarbonat, Zinkstannat und/oder - für den Fall, dass M ≠ Zn ist - das Zinksalz der Diethylphosphinsäure.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bei den Polyamiden handelt es sich um teilaromatische Polyamide.

Bevorzugt handelt es sich um Polyamide, die als aromatische Diamine Phenylendiamine oder Xylylendiamine enthalten.

Bevorzugt handelt es sich um Polyamide, die als aromatische Dicarbonsäuren Terephthalsäure oder Isophthalsäure enthalten.

Bevorzugt wird beim erfindungsgemäßen Verfahren als weitere Komponente C eine Stickstoff-, Phosphor- oder Phosphorstickstoffverbindung eingebracht.

Bevorzugt handelt es sich bei der Komponente C um Melaminphosphat, Dimelaminphosphat, Melaminpyrophosphat, Melaminpolyphosphate, Melampolyphosphate, Melempolyphosphate und/oder Melonpolyphosphate und/oder um Melaminkondensationsprodukte wie Melam, Melem und/oder Melon.

Bevorzugt handelt es sich bei der Komponente C auch um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

Bevorzugt handelt es sich bei den Polyestern um Polyethylenterephthalat oder Polybutylenterephthalat.

Die Erfindung betrifft auch ein Verfahren zur Herstellung flammwidriger, nicht korrosiver, gut fließfähiger teilaromatischer Polyamide und auch Formmassen daraus, dadurch gekennzeichnet, dass die flammhemmenden Komponenten A und B sowie gegebenenfalls C in die teilaromatischen Polyamide eingearbeitet werden, indem alle Bestandteile als Pulver und/oder Granulat in einem Mischer vorgemischt und anschließend in einem Compoundieraggregat in der Polymerschmelze homogenisiert werden und danach die erhaltenen Schmelze als Strang abgezogen, gekühlt und granuliert wird.

Die Erfindung betrifft auch ein Verfahren zur Herstellung flammwidriger, nicht korrosiver, gut fließfähiger teilaromatischer Polyamide und auch Formmassen daraus, dadurch gekennzeichnet, dass die flammhemmenden Komponenten A und B sowie gegebenenfalls C in die Polyamide eingearbeitet werden, indem alle Bestandteile als Pulver und/oder Granulat jeweils separat über eine Dosieranlage direkt in das Compoundieraggregat eingebracht werden.

Dle Erfindung betrifft auch ein Verfahren zur Herstellung flammwidriger, nicht korrosiver, gut fließfähiger teilaromatischer Polyamide und auch Formmassen daraus, dadurch gekennzeichnet, dass die flammhemmenden Komponenten A und B sowie gegebenenfalls C in die Polyamide eingearbeitet werden, indem alle Bestandteile einem fertigen Polymergranulat bzw. -pulver beigemischt werden und die Mischung direkt auf einer Spritzgussmaschine zu Formteilen zu verarbeitet wird.

Bevorzugt enthalten die Polymere 5 - 60 Gew.-% an faser- oder teilchenförmigen Füllstoffen oder deren Mischungen

Die Erfindung betrifft schließlich auch die Verwendung von Flammschutzmittelmischungen aus mindestens einem Phosphinsäuresalz der Formel (I) mit M = Al, Mg, Ca, Ti, Zn, Na (Komponente A) 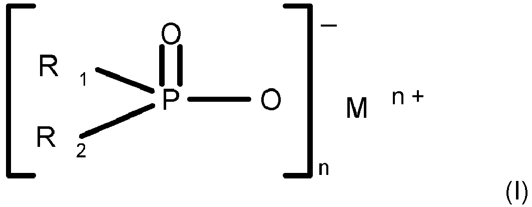 worin
R¹, R² gleich oder verschieden sind und C₁-C₆-Alkyl, linear oder verzweigt und/oder Aryl;
n 1 bis 3;
bedeuten und mindestens einer Komponente B, wobei es sich dabei um Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphinsäure und/oder der Ethylmethylphosphinsäure, Aluminiumoxid, Aluminium-hydroxid, Aluminiumphosphat, Aluminiumhypo-phosphit, Aluminiumnitrat und/oder basisches Aluminiumnitrat handelt und wobei Komponente A in 70 - 99,5 Gew.-% und Komponente B in 0,5 - 30 Gew.-% in der Flammschutzmittelmischung enthalten ist, zur Inhibierung der Korrosion bei der Herstellung von teilaromatischen Polyamidzusammensetzungen.

Bevorzugt handelt es sich hierbei um gut fließfähige Polyamide.

Bevorzugt wird bei der erfindungsgemäßen Verwendung die Korrosion von Metallteilen der Plastifiziereinheit und/oder der Düse beim Compoundieren bzw. Spritzgießen von teilaromatischen Polyamiden und/oder Compounds davon inhibiert.

Die Erfindung umfasst auch nichtkorrosive Polyamid-Formmassen enthaltend eine Flammschutzmittelmischung aus einem Phosphinsäuresalz der Formel (I) mit M = Al, Mg, Ca, Ti, Zn, Na (Komponente A) 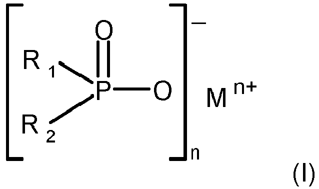 worin
- R¹, R²: gleich oder verschieden sind und C₁-C₆-Alkyl, linear oder verzweigt und/oder Aryl;
- n: 1 bis 3;
bedeuten, und als Komponente B Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphinsäure und/oder der Ethylmethylphosphinsäure, Aluminiumoxid, Aluminiumhydroxid, Aluminiumphosphat, Aluminiumhypophosphit, Aluminiumnitrat und/oder basisches Aluminiumnitrat, wobei Komponente A in 70 - 99,5 Gew.-% und Komponente B in 0,5 - 30 Gew.-% in der Flammschutzmittelmischung enthalten ist und teilaromatisches Polyamid.

Bevorzugt enthalten die nichtkorrosive Polyamid-Formmassen 0,05 bis 30 Gew.-% der Flammschutzmittelmischung aus Komponente A und Komponente B, wobei Komponente A in 70 - 99,5 Gew.-% und Komponente B in 0,5 - 30 Gew.-% in der Flammschutzmittelmischung enthalten ist und 99,95 bis 70 Gew.-% teilaromatisches Polyamid.

Die so hergestellten Polyamide sind hochgradig migrationsfest.

Bevorzugt handelt es sich bei den Metallsalzen der organischen Säuren um Aluminium-, Magnesium-, Natrium-, Zink- oder Bariumsalze der Octadecansäure, Stearinsäure, (=C₁₈), Nonadecansäure (=C₁₉), Eicosansäure, Arachinsäure, Arachidinsäure,Icosansäure (=C₂₀); Docosansäure, Behensäure, (=C₂₂) und Montansäure.

Weitere geeignete Antikorrosionsmittel sind z. B. Benzotriazole, (Amino)-phosphonat, Siloxan, Benzoat, und Sebacat.

Bevorzugt handelt es sich bei den Polymeren im Falle von teilaromatischen Polyamiden um solche vom Aminosäure-Typ und/oder vom Diamin-Dicarbonsäure-Typ.

Bevorzugt handelt es sich bei den teilaromatischen Polyamiden um teilkristalline Polyamide.

Als erfindungsgemäß geeignete teilaromatische, teilkristalline Polyamide können entweder Homopolyamide oder Copolyamide eingesetzt werden, deren wiederkehrende Einheiten aus Dicarbonsäuren und Diaminen sowie aus Aminocarbonsäuren bzw. der entsprechenden Lactame abgeleitet sind. Geeignete Dicarbonsäuren sind aromatische und aliphatische Dicarbonsäuren wie beispielsweise Terephthalsäure, Isophthalsäure, Adipinsäure, Azeiainsäure, Sebazinsäure, Dodekandicarbonsäure und 1,4-Cyclohexandicarbonsäure. Geeignete Diamine sind aliphatische und cycloaliphatische Diamine wie beispielsweise Hexamethylendiamin, Nonamethylendiamin, Dekamethylerdiamin, Dodekarnethylendiamin, 2-Methylpentamethylendiamin, 1,4-Cyclohexandiamin, Di-(4-diaminocyclo-hexyl)-methan, Di-(3-methyl-4-aminocyclohexyl)-methan. Geeignete Aminocarbonsäuren sind Aminocapronsäure und Aminolaurinsäure, die auch in Form der entsprechenden Lactame Caprolactam und Laurinlactam eingesetzt werden können.

Die Schmelzpunkte dieser teilaromatischen Polyamide liegen zwischen 280 und 340 °C, bevorzugt zwischen 295 und 325 °C.

Besonders bevorzugt bei den Polyamiden sind solche, die aus Terephtalsäure (TPS), Isophtalsäure (IPS) und Hexamethyldiamin oder aus Terephtalsäure, Adipinsäure und Hexamethyldiamin gebildet worden sind. Als günstige Verhältnisse haben sich dabei ca. 70:30 TPS:IPS bzw. 55:45 TPS:Adipinsäure herausgestellt. Die überlegenen Eigenschaften werden insbesondere durch diese beiden speziellen Polyamide realisiert.

Besonders bevorzugt als Komponente C sind Melaminpolyphosphat, Melem oder Melamincyanurat.

Copolyamide sind solche Produkte, die aus mehr als einem Polyamid-bildenden Monomeren hergestellt werden. Durch die Auswahl der Monomeren und des Mischungsverhältnisses kann man die Eigenschaften der Polyamide in einem sehr weiten Bereich variieren. Gegenüber den aliphatischen Copolyamiden sind bestimmte Copolyamide mit aromatischen Monomeren interessante technische Produkte. Sie zeichnen sich durch eine höhere Glasübergangstemperatur und durch einen höheren Schmelzpunkt der teilkristallinen Bereiche und damit mit einer für die praktische Verwendung ausreichenden Wärmeformbeständigkeit aus. So lassen sich ausgehend von Terepththalsäure und/oder Isophthalsäure und Polyaminen wie Hexamethylendiamin teilkristalline Polyamide mit hoher Wärmeformbeständigkeit herstellen.

Erfindungsgemäß geeignete teilaromatische Copolyamide sind beispielsweise in Becker/Braun Kunststoff Handbuch 3/4, Polyamide, herausgegeben von L. Bottenbruch und R. Binsack, Kapitel 6, teilaromatische und aromatische Polyamide, S. 803-845, beschrieben, worauf ausdrücklich Bezug genommen wird.

Erfindungsgemäß geeignete teilaromatische Copolyamide können auch BlockCopolymere der vorgenannten Polyamide mit Polyolefinen, Olefin-Copolymeren, lonomeren, oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyamidsysteme").

Im Folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im Wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyl-n-propyl-phosphinsäure, Dipropylphosphinsäure, Ethyl-Butylphosphinsäure, Dibutylphosphinsäure, Ethyl-Hexylphosphinsäure, Butyl-Hexylphosphinsäure, Methyl-phenyl-phosphinsäure und Diphenylphosphinsäure.

Die Salze der Phosphinsäuren für die vorliegende Erfindung können nach bekannten Methoden hergestellt werden, wie sie beispielsweise in der EP-A-0 699 708 näher beschrieben sind. Die Phosphinsäuren werden dabei beispielsweise in wässriger Lösung mit Metallcarbonaten, Metallhydroxiden oder Metalloxiden umgesetzt.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form eingesetzt werden. So können die Phosphinsäuresalze beispielsweise zur Erzielung einer besseren Dispersion im Polymeren zu einer feinteiligen Form vermahlen werden. Die Phosphinsäuresalze, wie sie gemäß der Erfindung in der Flammschutzmittel-Kombination eingesetzt werden, sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die flammhemmenden Komponenten A und B sowie gegebenenfalls C können in die Polyamide eingearbeitet werden, indem etwa alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A und B sowie gegebenenfalls C können auch separat über eine Dosieranlage direkt in das Compoundieraggregat eingebracht werden.

Es ist ebenso möglich, die flammhemmenden Komponenten A und B sowie gegebenenfalls C einem fertigen Polymergranulat bzw. -pulver beizumischen und die Mischung direkt auf einer Spritzgussmaschine zu Formteilen zu verarbeiten.

Als weitere Komponenten können die erfindungsgemäßen Polymere 5 - 60 Gew.-% an faser- oder teilchenförmigen Füllstoffen oder deren Mischungen enthalten. Als Beispiele für faserförmige Füllstoffe seien faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den teilaromatischen Polyamiden können die verwendeten Glasfasern mit einer Schlichte und einem Haftvermittler ausgerüstet sein. Der Durchmesser der üblicherweise verwendeten Glasfaser liegt im Bereich von 6 bis 20 µm.

Als teilchenförmige Füllstoffe eignen sich unter anderen Glaskugeln, Kreide, gepulverter Quarz, Talkum, Wollastonit, Kaolin, Glimmer. Übliche Additive sind beispielsweise Wärmeschutzmittel, Antioxidantien, Lichtschutzmittel, Gleitmittel, Entformungsmittel, Nukleierungsmittel, Pigmente, Farbstoffe, Antidripping-Mittel.

Die erfindungsgemäßen flammwidrigen, nicht korrosiven teilaromatischen Polyamide eignen sich zur Herstellung von Formkörpern, Filmen, Fäden und Fasern, beispielsweise durch Spritzgießen, Extrudieren oder Verpressen.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

### Beispiele

### 1. Eingesetzte Komponenten

### Teilaromatische Polyamide:

Polyamid 6T/66: Zytel® HTN FE 8200 (Fa. DuPont, USA): Polyamid aus Terephthalsäure, Diaminohexan, 2-Methyldiaminopentan
Glasfasern: Vetrotex EC 10 983, Fa. Vetrotex, Frankreich, für Polyamide Glasfasern: Vetrotex EC 10 952, Fa. Vetrotex, Frankreich, für PBT

### Flammschutzmittelkomponenten (pulverförmig):

Aluminiumsalz der Diethylphosphinsäure, im Folgenden als DEPAL bezeichnet
Zinksalz der Diethylphosphinsäure, im Folgenden als DEPZN bezeichnet, Schmelzpunkt 200 °C
Böhmit: Apyral® AOH 60, Fa. Nabaltec, D
Natriumphosphit Brüggolen H10, Brüggemann, D
Natriumhypophosphit, Vopelius, D
Zinkstannat Flametard S, William Blythe, GB
Zinkborat: Firebrake® 500, Borax, USA
Zinkcarbonat AC, Brüggemann, D
Melaminpolyphosphat, im Folgenden als MPP bezeichnet, Melapur® 200, Ciba SC, Schweiz
Melamincyanurat, im Folgenden als MC bezeichnet, Melapur® MC 50, Ciba SC, Schweiz

### Salze organischer Säuren:

Calciumsterat, Natriumstearat, Magnesiumstearat, Zinkstearat, Bariumstearat, Aluminiumstearat, Peter Greven Fettchemie, D
Calciummonatant Licomont CaV102
Natriummontanat Licomont NaV101
Clariant Produkte (Deutschland) GmbH, D

### 2. Herstellung, Verarbeitung und Prüfung von flammhemmenden Kunststoff-Formmassen

Die Polymere wurden auf einem Doppelschnecken-Extruder (Typ Leistritz ZSE 25/44) bei Temperaturen von 300 bis 320 °C (teilaromatische Polyamide) verarbeitet. Der homogenisierte Polymerstrang wurde abgezogen, im Wasserbad gekühlt und anschließend granuliert.

Die Flammschutzmittelkomponenten wurden in dem in den Tabellen angegebenen Verhältnis vermischt und über einen Seiteneinzug der Polymerschmelze zugegeben. Die Glasfasern wurden ebenfalls über einen Seiteneinzug zugegeben.

Nach ausreichender Trocknung wurden die Formmassen auf einer Spritzgießmaschine (Typ Arburg 320 C Allrounder) zu Prüfkörpern verarbeitet und anhand des UL 94-Tests (Underwriter Laboratories) und der Glühdrahtprüfung nach IEC 60695-2 auf Flammwidrigkeit geprüft und klassifiziert. Die Fließfähigkeit der Formmassen wurde durch Spritzen von Fließspiralen ermittelt. Die Länge des Fließweges ist ein Maß für die Fließfähigkeit unter Spritzgussbedingungen.

Die Korrosion wurde mit Hilfe der Plättchenmethode untersucht. Die am DKI (Deutsches Kunststoffinstitut, Darmstadt) entwickelte Plättchenmethode dient den Modelluntersuchungen zur vergleichenden Bewertung metallischer Werkstoffe bzw. der Korrosions- und Verschleißintensität plastifizierender Formmassen. Bei dieser Prüfung werden zwei Probekörper paarweise in der Düse angeordnet, so dass sie einen rechteckigen Spalt von 12 mm Länge, 10 mm Breite und einer Höhe von 0,1 bis maximal 1 mm verstellbaren Höhe für den Durchtritt der Kunststoffschmelze bilden. Durch diesen Spalt wird Kunststoffschmelze aus einem Plastifizieraggregat extrudiert (oder gespritzt) unter Auftritt großer lokaler Schubspannungen und Schergeschwindigkeiten im Spalt (Günther Mennig, Markus Lake "Verschleißminderung in der Kunststoffverarbeitung - Phänomene und Schutzmaßnahmen" 2. Auflage Carl Hanser Verlag, München 2008, Seiten 281-284; Eggering, P. et. al.: "Verschleiß an Metalloberflächen, die mit schnell strömenden Kunststoffschmelzen in Berührung stehen" Kunststofftechnik 10 (1971) 5, Seiten 159-168).

Eine Verschleißmessgröße ist der Gewichtsverlust der Probekörper, der durch Differenzwägung der Probekörper mit einer A&D "Electronic Balance" Analysenwaage mit einer Abweichung von 0,1 mg bestimmt wird. Die Massenbestimmung der Probekörper erfolgte vor und nach der Korrosionsprüfung mit je 25 oder 50 kg Polymerdurchsatz.

Nach einem vorher definierten Durchsatz (i. d. R. 25 oder 50 kg) werden die Probeplättchen ausgebaut und physikalisch/chemisch von dem anhaftenden Kunststoff gereinigt. Die physikalische Reinigung erfolgt durch Entfernen der heißen Kunststoffmasse durch Abreiben mit einem weichen Material (Baumwolle). Die chemische Reinigung erfolgt durch 20-minütiges Erhitzen der Probekörper auf 60 °C in m-Kresol. Nach dem Auskochen noch anhaftende Kunststoffmasse wird durch Abreiben mit einem weichen Baumwolltupfer entfernt.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt. Soweit nicht anders angegeben, handelt es sich bei Mengenangaben immer um Gew.-%.

Die Tabelle 1 zeigt, dass mit DEPAL in teilaromatischem Polyamid in 15 % Dosierung ein V-0 erreicht wird, aber deutliche Korrosion auftritt, sowohl glasfaserverstärkt als auch unverstärkt. Es wurde nun überraschend gefunden, dass wenn DEPAL partiell durch DEPZN ersetzt wird die Korrosion deutlich geringer wird unter gleichzeitiger Verbesserung der Fließfähigkeit. Der Zusatz von Natriumphosphit, Zinkstannat, Zinkcarbonat, Natriummontanat oder Aluminium-stearat oder eine Kombination aus Zinkcarbonat und Natriummontanat führt ebenfalls überraschend zu einer Verringerung der Korrosion.

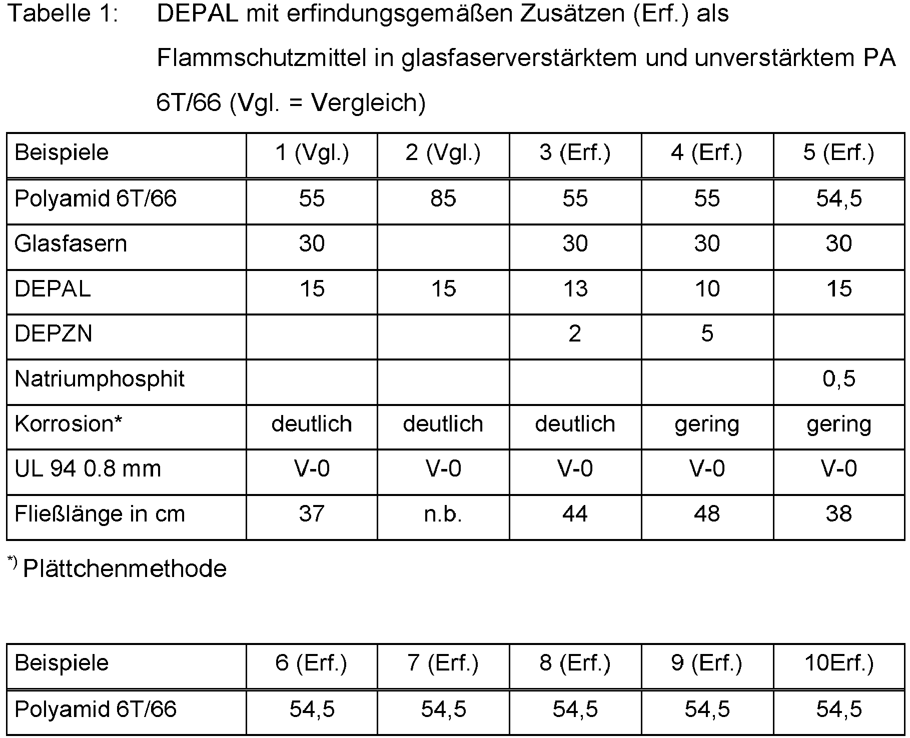

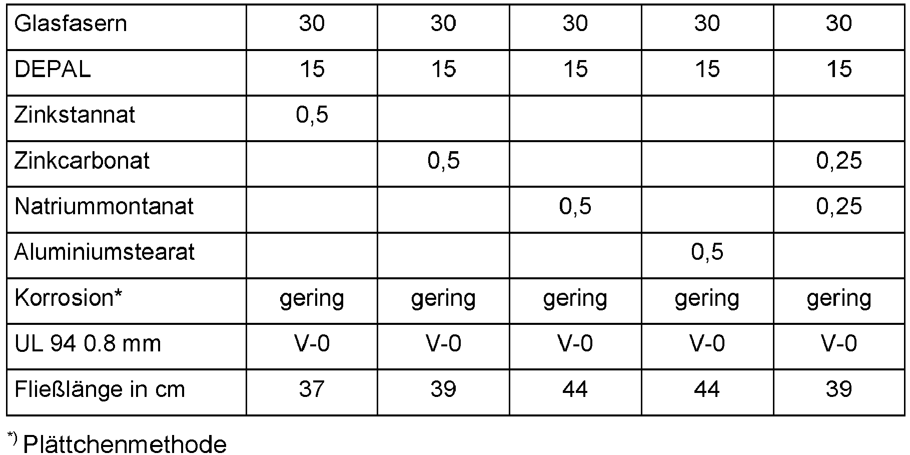

Die Tabelle 2 zeigt, dass Böhmit und Zinkborat synergistische Wirkung zu DEPAL haben, eine verringerte Korrosion bei gleichzeitiger V-0 Einstufung und verbesserter Fließfähigkeit ist auch hier durch die Kombination von DEPAL und DEPZN zu erreichen.

**Tabelle 2: DEPAL und DEPZN mit Zinkborat und Böhmit als Synergist in glasfaserverstärktem PA 6T/66**

| Beispiele | 11 (Vgl.) | 12 (Vgl.) | 13 (Erf.) | 14 (Erf.) | 15 (Erf.) |
|---|---|---|---|---|---|
| Polyamid 6T/66 | 55 | 55 | 55 | 55 | 55 |
| Glasfasern | 30 | 30 | 30 | 30 | 30 |
| DEPAL | 13 | 13 | 11 | 11 | 10 |
| DEPZN | | | 2 | 2 | 3 |
| Zinkborat | 2 | | 2 | | |
| Böhmit | | 2 | | 2 | 2 |
| Korrosion | deutlich | deutlich | gering | gering | gering |
| UL 94 0.8 mm | V-0 | V-0 | V-0 | V-0 | V-0 |
| Fließlänge in cm | 37 | 38 | 44 | 45 | 47 |

Weiterhin verwendete Materialien:
- Hydrotalcite:
   DHT-4A-2 Fa. Mitsui Chemicals, Japan
   Sorbacid 911, Fa. Südchemie, D
   Puralox MG63 HT, Fa. Sasol, D
   Alcamizer P, Kisuma Chemicals, NL
- Natriumcarbonat. Fa. Sigma-Aldrich, D
- Zinkborophosphat Storflam ZPB, Fa. Joseph Storey, UK

**Tabelle 3: DEPAL mit erfindungsgemäßen Zusätzen (Erf.) als Flammschutzmittel in glasfaserverstärktem PA 6T/66 (Vgl. = Vergleich)**

| Beispiele | 25 (Erf.) | 26 (Erf.) | 27 (Erf.) | 28 (Erf.) | 29 (Vgl.) |
|---|---|---|---|---|---|
| Polyamid 6T/66 | 54,5 | 54,5 | 54,5 | 54,5 | 54,5 |
| Glasfasern | 30 | 30 | 30 | 30 | 30 |
| DEPAL | 15 | 15 | 15 | 15 | 15 |
| Hydrotalcit | 0,5 | | | 1,0 | |
| Zinkborophosphat | | 0,5 | | | |
| Natriumcarbonat | | | 0,5 | | |
| Korrosion* | gering | gering | gering | keine | deutlich |
| UL 94 0.8 mm | V-0 | V-0 | V-0 | V-0 | V-0 |

| | | | | | |
|---|---|---|---|---|---|
| ^{*)} Plättchenmethode | | | | | |

## Patentansprüche

1. Verfahren zur Herstellung flammwidriger, nicht korrosiver, gut fließfähiger teilaromatischer Polyamide, **dadurch gekennzeichnet, dass** eine Flammschutzmittelmischung aus einem Phosphinsäuresalz der Formel (I) mit M = Al, Mg, Ca, Ti, Zn oder Na (Komponente A) 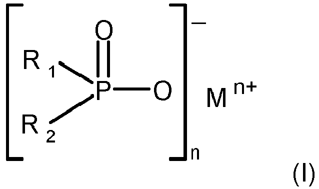 worin
R¹, R² gleich oder verschieden sind und C₁-C₆-Alkyl, linear oder verzweigt und/oder Aryl;
n 1 bis 3;
bedeuten, und als Komponente B Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphin-säure und/oder der Ethylmethylphosphinsäure, Aluminiumoxid, Aluminiumhydroxid, Aluminiumphosphat, Aluminiumhypophosphit, Aluminiumnitrat und/oder basisches Aluminiumnitrat eingesetzt wird, wobei Komponente A in 70 - 99,5 Gew.-% und Komponente B in 0,5 - 30 Gew.-% in der Flammschutzmittelmischung enthalten ist.

2. Verfahren nach Anspruch 1, **dadurch gekennzeichnet, dass** Komponente A in 95 - 99,5 Gew.-% und die Komponente B in 0,5 - 5 Gew.-% enthalten sind.

3. Verfahren nach Anspruch 1, **dadurch gekennzeichnet, dass** es sich bei Komponente B um Salze der Stearinsäure handelt, insbesondere um Natriumstearat, Bariumstearat, Aluminium- und/oder Zinkstearat.

4. Verfahren nach Anspruch 1, **dadurch gekennzeichnet, dass** es sich bei Komponente B um Umsetzungsprodukte von Montanwachssäuren mit einem Calcium- oder Natriumsalz handelt.

5. Verfahren nach einem oder mehreren der Ansprüche 1 bis 2, **dadurch gekennzeichnet, dass** es sich bei Komponente B um Natriumphosphit, Bariumsulfat, Zinkcarbonat, Zinkstannat und/oder - für den Fall, dass M ≠ Zn ist - das Zinksalz der Diethylphosphinsäure handelt.

6. Verfahren nach einem oder mehreren der Ansprüche 1 bis 5, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

7. Verfahren nach einem oder mehreren der Ansprüche 1 bis 6, **dadurch gekennzeichnet, dass** es sich um teilaromatische Polyamide handelt, die als aromatische Diamine Phenylendiamine oder Xylylendiamine enthalten.

8. Verfahren nach einem oder mehreren der Ansprüche 1 bis 7, **dadurch gekennzeichnet, dass** es sich um teilaromatische Polyamide handelt, die als aromatische Dicarbonsäuren Terephthalsäure oder Isophthalsäure enthalten.

9. Verfahren nach einem oder mehreren der Ansprüche 1 bis 8, **dadurch gekennzeichnet, dass** als weitere Komponente C eine Stickstoff-, Phosphor- oder Phosphorstickstoffverbindung eingebracht wird.

10. Verfahren zur Herstellung flammwidriger, nicht korrosiver, gut fließfähiger teilaromatischer Polyamide nach Anspruch 1, **dadurch gekennzeichnet, dass** es sich bei der Komponente C um Melaminphosphat, Dimelaminphosphat, Melaminpyrophosphat, Melaminpolyphosphate, Melampolyphosphate, Melempolyphosphate und/oder Melonpolyphosphate und/oder um Melaminkondensationsprodukte wie Melam, Melem und/oder Melon handelt.

11. Verfahren zur Herstellung flammwidriger, nicht korrosiver, gut fließfähiger teilaromatischer Polyamide nach einem oder mehreren der Ansprüche 9 bis 10, **dadurch gekennzeichnet, dass** es sich bei der Komponente C um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

12. Verfahren zur Herstellung flammwidriger, nicht korrosiver, gut fließfähiger teilaromatischer Polyamide und auch Formmassen daraus nach einem oder mehreren der Ansprüche 1 bis 11, **dadurch gekennzeichnet, dass** die flammhemmenden Komponenten A und B sowie gegebenenfalls C in die Polyamide eingearbeitet werden, indem alle Bestandteile als Pulver und/oder Granulat in einem Mischer vorgemischt und anschließend in einem Compoundieraggregat in der Polymerschmelze homogenisiert werden und danach die erhaltenen Schmelze als Strang abgezogen, gekühlt und granuliert wird.

13. Verfahren zur Herstellung flammwidriger, nicht korrosiver, gut fließfähiger teilaromatischer Polyamide und auch Formmassen daraus nach einem oder mehreren der Ansprüche 1 bis 11, **dadurch gekennzeichnet, dass** die flammhemmenden Komponenten A und B sowie gegebenenfalls C in die Polyamide eingearbeitet werden, indem alle Bestandteile als Pulver und/oder Granulat jeweils separat über eine Dosieranlage direkt in das Compoundieraggregat eingebracht werden.

14. Verfahren zur Herstellung flammwidriger, nicht korrosiver, gut fließfähiger teilaromatischer Polyamide und auch Formmassen daraus nach einem oder mehreren der Ansprüche 1 bis 11, **dadurch gekennzeichnet, dass** die flammhemmenden Komponenten A und B sowie gegebenenfalls C in die Polyamide eingearbeitet werden, indem alle Bestandteile einem fertigen Polymergranulat bzw. -pulver beigemischt werden und die Mischung direkt auf einer Spritzgussmaschine zu Formteilen zu verarbeitet wird.

15. Verfahren zur Herstellung flammwidriger, nicht korrosiver, gut fließfähiger teilaromatischer Polyamide und auch Formmassen daraus nach einem oder mehreren der Ansprüche 1 bis 14, **dadurch gekennzeichnet, dass** die Polymere 5 - 60 Gew.-% an faser- oder teilchenförmigen Füllstoffen oder deren Mischungen enthalten

16. Verwendung von Flammschutzmittelmischungen aus mindestens einem Phosphinsäuresalz der Formel (I) mit M = Al, Mg, Ca, Ti, Zn, Na (Komponente A) 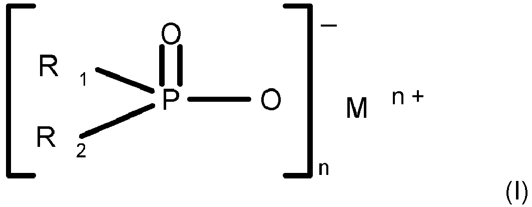 worin
R¹, R² gleich oder verschieden sind und C₁-C₆-Alkyl, linear oder verzweigt und/oder Aryl;
n 1 bis 3;
bedeuten und mindestens einer Komponente B, wobei es sich dabei um Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphin-säure und/oder der Ethylmethylphosphinsäure, Aluminiumoxid, Aluminiumhydroxid, Aluminiumphosphat, Aluminiumhypophosphit, Aluminiumnitrat und/oder basisches Aluminiumnitrat handelt und wobei Komponente A in 70 - 99,5 Gew.-% und Komponente B in 0,5 - 30 Gew.-% in der Flammschutzmittelmischung enthalten ist, zur Inhibierung der Korrosion bei der Herstellung von teilaromatischen Polyamidzusammensetzungen.

17. Verwendung nach Anspruch 16, **dadurch gekennzeichnet, dass** die Korrosion von Metallteilen der Plastifiziereinheit und/oder der Düse beim Compoundieren bzw. Spritzgießen von teilaromatischen Polyamiden und/oder Compounds davon inhibiert wird.

18. Nichtkorrosive Polyamid-Formmassen enthaltend eine Flammschutzmittelmischung aus einem Phosphinsäuresalz der Formel (I) mit M = Al, Mg, Ca, Ti, Zn, Na (Komponente A). 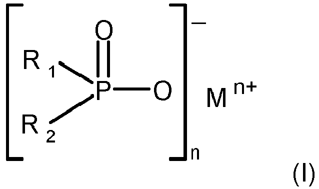 worin
R¹, R² gleich oder verschieden sind und C₁-C₆-Alkyl, linear oder verzweigt und/oder Aryl;
n 1 bis 3;
bedeuten, und als Komponente B Aluminium-, Magnesium-, Kalium-, Natrium-, Zink- oder Bariumsalze von Fettsäuren, die Kettenlängen von C₁₄ bis C₄₀ aufweisen, Natriumphosphit, Natriumhypophosphit, und/oder - für den Fall, dass M ≠ Na ist - das Natriumsalz der Dimethylphosphinsäure, der Diethylphosphinsäure und/oder der Ethylmethylphosphinsäure, Natriumnitrat, Natriumnitrit, Natriumcarbonat; Bariumsulfat, Calciumcarbonat, Calciumphosphit, Calciumhypophosphit, Magnesiumborat, Magnesiumhydroxid, Hydrotalcite, Magnesium-Carbonate, Magnesium-Calcium-Carbonate, Zinkoxid, Zinkcarbonat, Zinkhydroxycarbonat, Zinkstannat, Zinkhydroxystannat, Zinkphosphat, Zinkborophosphat, Zinksulfid, und/oder - für den Fall, dass M ≠ Zn ist - das Zinksalz der Dimethylphosphinsäure, der Diethylphosphinsäure und/oder der Ethylmethylphosphinsäure, Aluminiumoxid, Aluminiumhydroxid, Aluminiumphosphat, Aluminiumhypophosphit, Aluminiumnitrat und/oder basisches Aluminiumnitrat, wobei Komponente A in 70 - 99,5 Gew.-% und Komponente B in 0,5 - 30 Gew.-% in der Flammschutzmittelmischung enthalten ist und teilaromatisches Polyamid.

19. Polyamid-Formmassen nach Anspruch 18., **dadurch gekennzeichnet, dass** 0,05 bis 30 Gew.-% der Flammschutzmittelmischung aus Komponente A und Komponente B, wobei Komponente A in 70 - 99,5 Gew.-% und Komponente B in 0,5 - 30 Gew.-% in der Flammschutzmittelmischung enthalten ist, und 99,95 bis 70 Gew.-% teilaromatisches Polyamid enthalten sind.
